# EUROPEAN PATENT APPLICATION

(11) **EP 3 267 288 A1**
(43) Date of publication of application: **10.01.2018**
(21) Application number: 16305866.2
(22) Date of filing: 08.07.2016
(51) Int. Cl.: G06F 3/01

(54) **METHOD, APPARATUS AND SYSTEM FOR RENDERING HAPTIC EFFECTS**

(71) Applicant: Thomson Licensing, 92130 Issy-les-Moulineaux (FR)
(72) Inventor: LEROY, Bertrand, 35576 CESSON-SEVIGNE (FR); DANIEAU, Fabien, 35576 CESSON-SEVIGNE (FR); ORLAC, Izabela, 35576 CESSON-SEVIGNE (FR)
(74) Representative: Huchet, Anne

(57) **Abstract**

The present disclosure relates to methods, apparatus or systems for managing a map of haptic atmospheres over a topographical zone. The zone may contain relief or noticeable objects. A set of devices equipped with haptic sensors and haptic actuators is wore by a set of users spread over the topographical zone. Each device is contributing to the management of the map by sending its localized haptic measurements to a server. The server calculates and maintain the map according to these spread measurements. Client devices also send request to get a haptic effect representative of the haptic atmosphere around a second location in the topographical zone. The server calculates the response according to this second location and to the characteristics of the client.

## Description

### 1. Technical field

The present disclosure relates to the domain of immersive haptic effects, for example for obtaining information about a topographical zone through haptic effects.

### 2. Background

New technology developments notably focus on haptic stimulation to better immerse users when consuming when living an experience like, for example watching a video, playing a game, attending a festival, skiing or touring a country. The haptic effects allow to share and physically feel what's going on in a virtual environment or audiovisual content. For instance, in "A Framework for Enhancing Video Viewing Experience with Haptic Effects of Motion", Danieau et al. propose a capture system based on an accelerometer to capture the movement of an actor. This movement can be then played back as a haptic effect of motion on a force-feedback devices.

Thanks to a growing number of wearable devices that people constantly carry on them, it is now possible to record haptic measurements from multiple individuals (e.g. acceleration, position, temperature) spread over a geographical zone. End-users may accept to share the haptic measurements of their wearable device with a community server. However, there is a lack of a system that would allow these end-users to be in turn informed of the state of the haptic atmosphere over a geographical zone via haptic effects.

### Summary

The purpose of the present disclosure is to overcome the lack of such a system which determine and transmit haptic effects to its end-users' wearable haptic devices according to the state of what this plurality of wearable haptic devices measure over a geographical zone. The present disclosure relates to a method of transmitting data, called second data, representative of a haptic effect, the method comprising:
- Receiving at least one first data comprising a haptic measurement associated with a first location in a topographical zone;
- Generating a map of said topographical zone, the map comprising topographical clusters of said at least one haptic measurement according to the location that the at least one haptic measurement is associated with;
- Receiving a request of transmitting said second data from a client, said request comprising at least one second location in the topographical zone;
- Transmitting the second data to said client in response to the request, said second data being representative of a haptic effect calculated according to the topographical clusters of said map and said at least one second location.

The present disclosure also relates to an apparatus configured to transmit a second data representative of a haptic effect, the apparatus comprising:
- A receiver configured to receive at least one first data comprising a haptic measurement associated with a first location in a topographical zone;
- A processor configure to generate a map of said topographical zone, the map comprising topographical clusters of said at least one haptic measurement according to the location that the at least one haptic measurement is associated with;
- A receiver configured to receive a request of transmitting said second data from a client, said request comprising at least one second location in the topographical zone;
- A transmitter configured to transmit the second data to said client in response of the request, said second data being representative of a haptic effect calculated according to the topographical clusters of said map and said at least one second location.

According to a particular characteristic, the received request further comprises a description of the haptic actuators of the client which have sent said request and wherein the second data are further calculated according to said description. Advantageously, the request from the client does not comprise a second location. In this case, the server set the value of the location associated with the last received haptic measurement from said client to the second location.

The present disclosure also relates to a method of rendering a haptic effect on a wearable device equipped with at least one haptic sensor and at least one haptic actuator, the method comprising:
- Transmitting, to a server, at least one first data comprising a haptic measurement obtained from said at least one haptic sensor and associated with a first location in a topographical zone;
- Transmitting to the server a request of transmitting a second data representative of a haptic effect, said request comprising at least one second location in the topographical zone;
- Receiving, the second data from said server in response to the request, said second data being representative of said haptic effect calculated according to said at least one second location and a map of said topographical zone, said map comprising topographical clusters calculated according to at least said at least one first data;
- Rendering said haptic effect with the said at least one actuator of said device.

According to a particular characteristic, the request further comprises a description of said at least one haptic actuator. Advantageously, no second location is transmitted in the request, indicating to the server that the second location to use is the location associated with the last sent haptic measurement.

The present disclosure also relates to an apparatus configured to render a haptic effect, said device being equipped with at least one haptic sensor and at least one haptic actuator, the apparatus comprising:
A transmitter configured to transmit, to a server, at least one first data comprising a haptic measurement obtained from said at least one haptic sensor and associated with a first location in a topographical zone;
   - A transmitter configured to transmit to the server a request of transmitting a second data representative of a haptic effect, said request comprising at least one second location in the topographical zone;
   - A receiver configured to receive the second data from the server, said second data being representative of said haptic effect calculated according to said at least one second location and a map of said topographical zone, said map comprising topographical clusters calculated according to at least said at least one first data;
   - The at least one actuator of the device configured to render said haptic effect.

The present disclosure also relates to a computer program product comprising program code instructions to execute the steps of the method of transmitting data when this program is executed on a computer and also relates to a computer program product comprising program code instructions to execute the steps of the method of rendering a haptic effect when this program is executed on a computer.

### 3. List of figures

The present disclosure will be better understood, and other specific features and advantages will emerge upon reading the following description, the description making reference to the annexed drawings wherein:
- **Figure 1** illustrates an example of topographical zone on which a set of users is spread. Each of the users is equipped with a wearable apparatus which comprises at least one haptic sensor and a least one haptic actuator and which is configured to implement a method of rendering a haptic effect as illustrated on **Figure 5****,** according to a specific embodiment of the present principles;
- **Figure 2** illustrates an example clustering of the measurement obtained from the wearable client devices on the topographical zone of **Figure 1****,** according to a specific embodiment of the present principles;
- **Figure 3** illustrates an example calculation of the response to a request from the wearable device of **Figure 1****,** according to a specific embodiment of the present principles;
- **Figure 4** shows a hardware embodiment of a device configured to implement methods described in relation with **Figure 5** **or** **6****,** according to a specific embodiment of the present principles;
- **Figure 5** diagrammatically shows an embodiment of a method of rendering haptic effects as implemented in a processing device such as the device according to a non-restrictive advantageous embodiment;
- **Figure 6** diagrammatically shows an embodiment of a method of rendering haptic effects as implemented in a processing device such as the device according to a non-restrictive advantageous embodiment.

### 4. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It is understood that subject matter embodiments can be practiced without these specific details.

Haptic technology relates to the sense of touch. Haptic effectors apply forces, vibrations, or motions to the user. Haptic devices may incorporate tactile sensors that measure forces, vibrations, or motions exerted by the user on the interface. In the context of this disclosure, "haptic" has a broader definition that comprises other physical phenomena that a user can feel through her skin and muscles. Effectors and sensors are available for these sensing domains. This includes, for example, temperature (heat or cold effectors and thermometers) and humidity (sprays and hydrometers). A haptic measurement is a data measured by a haptic sensor with this broad definition of haptics or a combination of such data. Reciprocally a haptic effect is an effect that may be rendered by a haptic effector with this broad definition of haptics or a combination of such effects.

According to a non-limitative embodiment of the present disclosure, a method and a server device to collect haptic measurements of a set of wearable haptic devices spread over a geographical area is disclosed. A topographical map of the area is managed by the server device. The map is updated according to the collected haptic measurements. A response is calculated for every client devices that is representative of the haptic atmosphere over the map seen from a given location, for example, the current location of the wearable device at the moment the response is calculated. The response depends on the

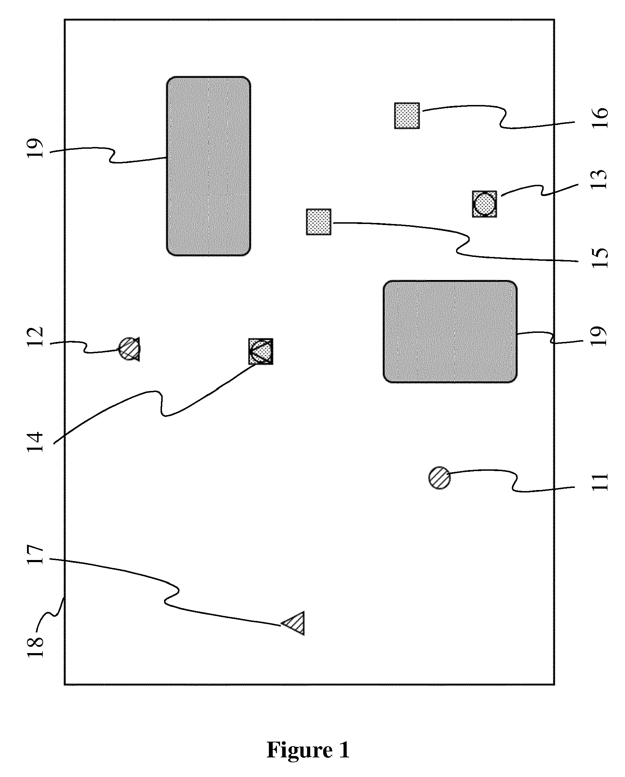

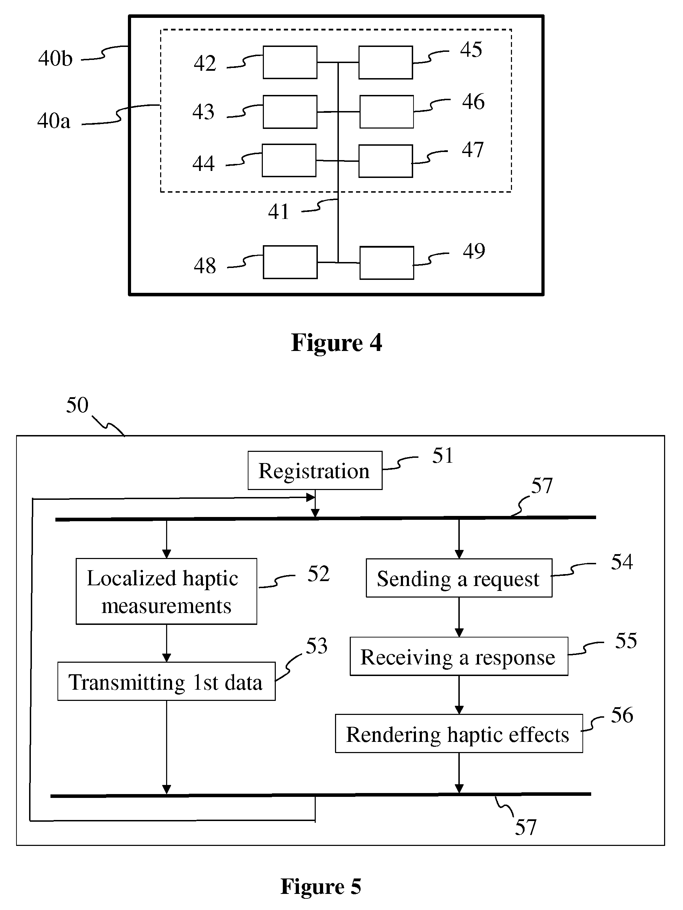

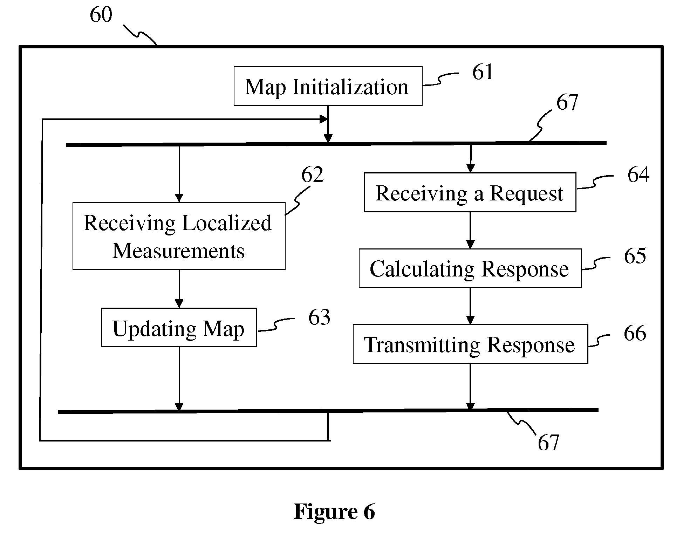

**Figure 1** illustrates an example topographical zone 18 on which a set of users is spread. Each of the users is equipped with a wearable apparatus which comprises at least one haptic sensor and a least one haptic actuator and which is configured to implement a method of rendering a haptic effect as illustrated on **Figure 5****.** The users may be motionless or may wander on the topographical zone. Devices wore by the users may be equipped with different sets of haptic actuators and/or different sets of haptic actuators. For illustration example, in **Figure 1****,** devices 11, 12, 13 and 14 are equipped with a thermometer (illustrated thanks to a circle); devices 13, 14, 15 and 16 are equipped with a vibration sensor (illustrated thanks to a square); and devices 12, 14 and 17 are equipped with audio level detector (e.g. a microphone, illustrated thanks to a triangle). Devices 11, 12 and 17 are equipped with a unique vibrator (illustrated by dashed lines) while devices 13, 14, 15, 16 are equipped with a haptic vest (illustrated by dots). A haptic vest is a cloth in which haptic effectors (e.g. vibrators and/or heat points) are distributed. With such a vest, a user may receive haptic information localised over her body, differentiating, for example stimuli from the right side or from the left side. Devices are connected to a server configured to implement a method as illustrated in **Figure 6****.** The connection is preferentially wireless, for example may use a WiFi network or a GSM network or a combination of different networks.

According to a particular embodiment, a device takes measurements with its haptic sensors at a regular frequency, for example every one-tenth of a second or every half second or every one second. According to another embodiment, different haptic sensors do not take measurements at the same frequency. A device sends a message to the server each time a new measurement is available from any of its haptic sensors. Such a message comprises, for each available measurement, at least a data representative of the type of the haptic sensor, the value of the measurement and the location at which the measurement has been taken. A message may comprise additional information, for example an identifier of the device or a description of the haptic actuators of the device. In a variant, a device sends a message to a server at a regular frequency, the message comprising the last measurement (and its associated location) of each of its haptic sensors. The regular sending frequency is for example ten hertz or one hertz or 0.5 hertz. In another variant, the location associated with the measurement may be the current location of the device while the measurement is the last one taken by a haptic sensor. In another variant, a device sends a message when one of the value (location or measurement) has changed over a given difference. For instance, a message is sent only if the location is different by at least one meter or one foot from the previous location, or, for example, if the temperature varied at least of half a Celsius degree or one Celsius degree from the previous measurement.

In all embodiments, a device get a response from the server for its participation to the knowledge of the haptic atmosphere over the topographical zone. Another type of client devices equipped only with haptic sensors may be connected to the server. No response is calculated for these client devices as they are not equipped with haptic actuators. Some devices equipped only with haptic actuators may be connected to the server. According to a particular embodiment, such a device sends messages comprising at least its localisation without any associated measurement, and a response may be calculated and transmitted to such a client device despite the absence of its participation to the map.

On the example of **Figure 1****,** the topographical zone 18 is delimited by a rectangle. In a variant, the topographical zone is delimited by an ellipse or any other two-dimensional shape, for example defined by an iso-line contours. The topographical zone may contain relief 19 or noticeable objects 19. For example, when the invention is used to manage the haptic atmosphere of a skiing domain, the relief 19 is obviously taken into account when representing the topographical zone. When the invention is used to manage the haptic atmosphere of a music festival, the different stages are noticeable objects 19 and appear on the map.

When a user is moving out of the geographical zone, her wearable device is no longer taken into account by the server even if messages from this device keep being received.

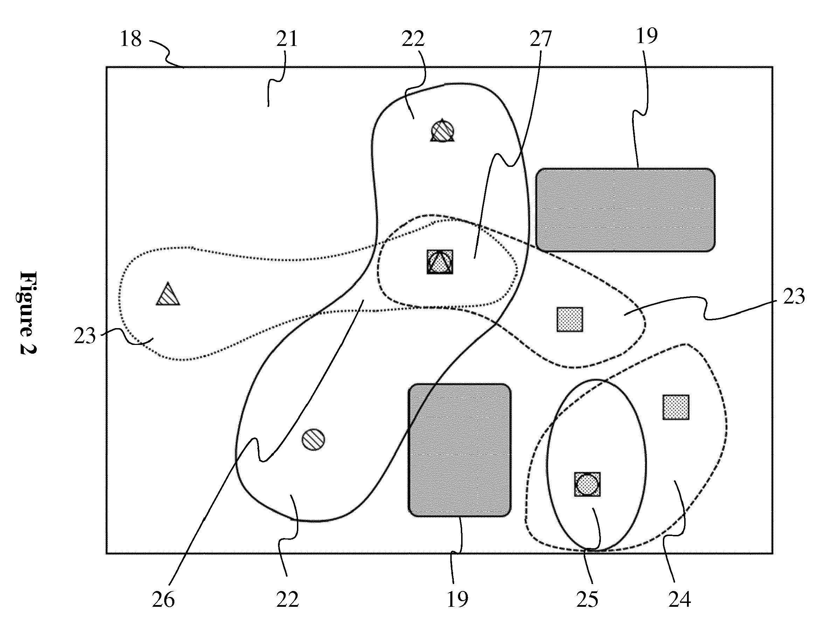

**Figure 2** illustrates an example clustering of the measurement obtained from the wearable client devices on the topographical zone of **Figure 1****.** For instance, clusters are calculated for each type of haptic measurement. On the example of **Figure 2****,** clusters defined on measurement values and localisation, are calculated for temperature, for vibration and for audio level. Clusters are calculated according a clustering function, for example k-means. Cluster may also be constructed according to iso-line values as in meteorological maps. The layering of the haptic measurement type maps leads to a map zoned according to haptic atmosphere. Figure 2 illustrates an example with a default area 21 wherein no data is available. Over this global region, areas are distinguishable according to the layering of cluster zones. Areas may not be connected. For example, on **Figure 2****,** the haptic area 22 is made of two topographical areas; In this example, devices 11, 12 and 14 have been clustered as reporting similar temperatures (thermometers are illustrated by circles). Over this area, homogeneous in temperature, devices 14 and 15 have been clustered as reporting similar vibration levels and devices 14 and 17 have been clustered as reporting similar audio level. The audio level of device 12 is not (yet) available in this map. The layering of the areas defined by these three clusters cut the first area in two areas 22 where only the temperature is available. Haptic areas 23 and 24 are also defined according to only one cluster. Areas are defined, for instance, by the superimposition of haptic measurement clusters. For example on **Figure 2****,** haptic areas 25 and 26 are areas where a combination of two haptic measurements is available. The three managed types of haptic measurements are used to delimit the haptic area 27.

According to another embodiment, clusters are calculated according to a weighted Voronoï diagram where points are localisations of the wearable devices and weights, the value of measurements. According to another embodiment, relief 19 or noticeable objects 19 are taken into account for the calculation of clusters. For instance, relief 19 or noticeable objects 19 may facilitate or curb the spread of a cluster over the topographical surface.

Haptic areas are representative of a haptic atmosphere. For example, let's consider a music festival with multiple scenes. A haptic atmosphere is represented by a relevant cluster in proximity of the stages. In front of a metal-rock stage, the haptic data of the cluster allow the server to label this haptic atmosphere as "dynamic"; whereas in front of a love-songs stage, the haptic data of this cluster lead the server to label this haptic atmosphere as "smooth". Corresponding haptic effects, representative of these semantic labels are calculated to inform the user about each type of atmosphere.

Another example is a football match. A set of spectators spread in the stadium may be equipped with wearable devices and contribute to calculate a map of the different haptic atmospheres over the stands. A TV viewer, watching the game, is then able to choose a camera depending on a preferred haptic atmosphere. Thus, she can feel the atmosphere of a given stand.

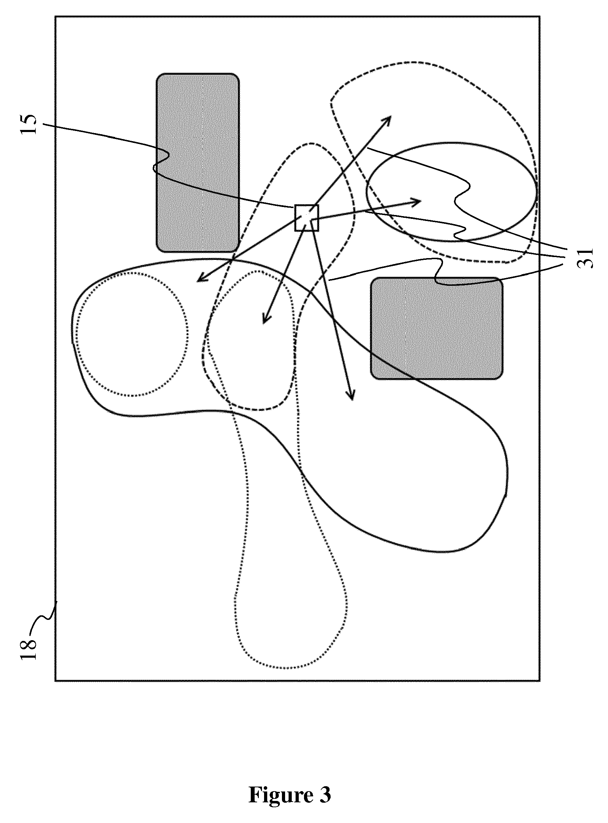

**Figure 3** illustrates an example calculation of the response to a request from the wearable device 15 of **Figure 1****.** The request from the wearable device comprises a location, hereafter called second location, on the topographical zone 18, for instance its own location. Taking this second location as a centre point, the server computes a vector 31 from this second location to at least one haptic area of the haptic map, for example the haptic area, different from the haptic area the second location is contained in, which is the closest from the second location. The distance between the second location and a haptic area is, for instance, calculated as the smallest Euclidian distance on the map between the second location and the edge of the haptic area. In a variant, a centroid is calculated for each haptic area of the map and the distance between the second location and a haptic area is, for example, the Euclidian distance on the map between the second location and the centroid of the haptic area. In a variant, several vectors 31 are calculated from the second location toward the n closest haptic areas for example, with n being equal to two or three or five, for instance. In a variant, the number of calculated vectors 31 depends on the type of haptic actuators the wearable device 15 is equipped with.

The server may use the description of the haptic actuators of the wearable device 15 (in the example of **Figure 3**), to compute the response according to the calculated vectors 31. In this example, the device 15 is equipped with a haptic vest which is able to render a directional haptic effect (i.e. a haptic vest can make the user feel different haptic effects on her left and right side, in front and in back of her, etc.). So, the server calculates a response adapted to a haptic vest. For instance, on Figure 3, if the user wearing the device 15 is facing north, the haptic response will be directed on her left back. For a device equipped with different actuators, the response would be different. For instance, a unique vibrator cannot render such a detailed information. In this case, the intensity is adapted to warn the user about a global atmosphere. The type (e.g. vibration, heat, sound), the direction and the intensity of haptic effects calculated as a response depends on the direction and length of vectors 31 and on the intensities of haptic measurements associated with the pointed haptic areas.

In another embodiment, the second location sent by the wearable device 15 in its request is different from its own location. For instance, the wearable device 15 is equipped with an interface which allow the user to select a location on the topographical zone 18 and to generate a request according to this selected location. In another embodiment, when the client device already has sent messages comprising haptic measurements, the request may not comprise the second location, indicating to the server to use the location associated with the last sent haptic measurement as the second location.

**Figure 4** shows a hardware embodiment of a device 40a configured to implement methods described in relation with **Figure 5** **or** **6****.** In this example, the device 40a comprises the following elements, connected to each other by a bus 41 of addresses and data that also transports a clock signal:
- a microprocessor 42 (or CPU), which is, for example, a DSP (or Digital Signal Processor);
- a non-volatile memory of ROM (Read Only Memory) type 43;
- a local memory 44, e.g. a video memory or a RAM (or Random Access Memory), a flash memory, a hard disk ;
- an I/O interface 45 for reception of data to transmit, from an application, e.g. a wireline interface (for example a bus interface, a wide area network interface, a local area network interface) or a wireless interface (such as a IEEE 802.11 interface or a Bluetooth® interface);
- a positioning module 46, e.g. a satellite positioning system such as GPS, information receiver from nearby cellular base stations or information receiver from other transmitters such as WiFi network devices; and
- a power source 47.

In accordance with an example, the power source 47 is external to the device. In each of mentioned memory, the word « register » used in the specification may correspond to area of small capacity (some bits) or to very large area (e.g. a whole program or large amount of received or decoded data). The ROM 43 comprises at least a program and parameters. The ROM 43 may store algorithms and instructions to perform techniques in accordance with present principles. When switched on, the CPU 42 uploads the program in the RAM and executes the corresponding instructions.

RAM 44 comprises, in a register, the program executed by the CPU 42 and uploaded after switch on of the device 40a, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), set-top-boxes and other devices that facilitate communication of information between end-users.

In accordance with an example of rendering haptic effect as illustrated on **figure 5****,** a device 40b comprises the device 40a and further comprises at least one haptic sensor 48 and at least one haptic actuator 49 connected to the device 40a via the bus 41. For example, the at least one haptic sensor 48 belongs to a set comprising at least a thermometer, a vibration sensor, a microphone, a hygrometer and a compass. For instance the at least one haptic actuator 49 belongs to a set comprising at least a vibrator, a heat point and a speaker. According to one particular embodiment, the algorithms implementing the steps of a method of rendering a haptic effect and described hereafter in **Figure 5** are stored in a memory RAM 44 associated with the device 40a implementing these steps. Haptic measurements are captured by haptic sensors 48 and transmitted to the server by the I/O interface 45. Requests are calculated by the microprocessor 42 and transmitted by the I/O interface 45. Response are received by the I/O interface 45, decoded by the CPU 42 and decoded haptic effects are rendered by haptic actuators 49.

In accordance with an example of transmitting data representative of a haptic effect as illustrated in **Figure 6****,** the device 40a is a server calculating a map representative of haptic atmospheres of a topographical zone. Haptic measurements sent by client wearable devices are received by the I/O interface 45 and integrated to the map by the CPU 42. The map and data necessary for its calculation are, for example, stored in the RAM 44. Requests from the client devices are also received by the I/O interface 45. They are interpreted by the CPU 42 which calculates responses to these requests. Responses are sent by the I/O interface 45.

In accordance with examples, devices 40a and 40b belong to a set comprising:
- a mobile device ;
- a communication device ;
- a game device ;
- a tablet (or tablet computer) ;
- a laptop ;
- an encoding chip; and
- a personal computer.

**Figure 5** diagrammatically shows an embodiment of a method 50 of rendering haptic effects as implemented in a processing device such as the device (40b) according to a non-restrictive advantageous embodiment.

In an initialization step 51, a client wearable device 40b connects to a server 40a. At this step, a client device inform the server about its participation to the map of haptic atmospheres. In a variant, the client device transmit a description of its haptic sensors and haptic actuators. The server stores these information in order to adapt the calculation of responses to the requests from this device.

The device is then set in state 57. When the device is in state 57, the method is composed of two separated processes which may be executed in parallel or sequentially. On a first hand, in a step 52, measurements are obtained from haptic sensors 48. Actual location of the wearable device is also determined by the positioning module 46. In a step 53, a message comprising the haptic measurement and the actual location of the device is composed and transmitted to the server. When a wearable device 40b is equipped with several haptic sensors, a message is sent each time a new measurement is obtained from the haptic sensors, even if these sensors do not refresh on the same frequency. In a variant, the device microprocessor 42 waits to have obtained a new measurement from each of the haptic sensors before composing a new message. When new measurements are available, they are associated in the message with the last known location. In a variant, the location is updated before a new message is sent.

In a step 54, the wearable device 40b transmits a request to the server. The request comprises the last know location of the wearable device. In a variant, the positioning module 46 checks the actual location of the wearable device before the sending of the request. In another variant, the wearable device 40b is further equipped with an interface which allow the user to select a second location in the topographical zone. This second location is sent in the request. In another embodiment, if the wearable device has already sent at least one message including localized haptic measurement, the request does not comprise a second location indicating that the location of the last sent message has to be considered as the second location by the server. In a step 55, the wearable device waits for a response for a determined delay. When the delay is over and if no response have been received, the device is set back in state 57. If a response to this request is received after the timeout, the response is ignored. As soon as a response has been received, the response is decoded. A response contains the description of haptic effects to render. If the response has been calculated in a generic way, the wearable device may have to convert it in haptic effect renderable with its own haptic actuators. The calculated haptic effects are rendered by the haptic actuators in a step 56. After the rendering is completed, the wearable device is set in state 57.

**Figure 6** diagrammatically shows an embodiment of a method 60 of rendering haptic effects as implemented in a processing device such as the device (40b) according to a non-restrictive advantageous embodiment.

In an initialization step 61, the map representing the topographical zone that the wearable devices are spread on is initiated. The noticeable objects and reliefs are set up. Each time a new client wearable device is connecting for the first time, this new client is registered. The very first location of the device (at the moment of the registration) is stored as a reference datum. Indeed, the newly connected device may communicate its position by absolute or differential position data. In a variant, the device communicates its own description of haptic sensors and haptic actuators at the registration step.

The device is then set in state 67. When the device is in state 67, the method is composed of two separated processes which may be executed in parallel or sequentially. In a step 62, the server device receives a messages from one of its registered clients comprising haptic measurements associated with a location on the topographical zone, the map is deigned on. In a step 63 this information is added to the known mapped information in order to update the current map. In a variant a brand new map is generated. The sum of haptic measurements from client devices is integrated and clustered according to a clustering function. For example, the clustering function is based on the k-means method. In another variant, the clustering function is based on weighted Voronoï diagrams. Clusters may, for example, be established according to the haptic type of their measurement. The layering of haptic typed maps is forming haptic areas representative of haptic atmospheres.

In a step 64, the server is receiving a request from a client. The request comprises an identification of the sending client and a second location. In another embodiment, the request does not comprise a second location indicating to the server to use the location of the last message sent by this client and received in a step 62 as the second location. In a step 65, the microprocessor 42 of the server device 40a calculates a response adapted to the wearable client which sent the request. The server calculates at least one vector 31 from the location indicated in the request, hereafter called the second location, to one of the haptic area, for example the haptic area, different from the haptic area the second location is contained in, which is the closest from the second location. The distance between the second location and a haptic area is, for instance, calculated as the smallest Euclidian distance on the map between the second location and the edge of the haptic area. In a variant, a centroid is calculated for each haptic area of the map and the distance between the second location and a haptic area is, for example, the Euclidian distance on the map between the second location and the centroid of the haptic area. In a variant, several vectors 31 are calculated from the second location toward the n closest haptic areas for example, with n being equal to two or three or five, for instance. In a variant, the number of calculated vectors 31 depends on the type of haptic actuators the wearable device 15 is equipped with.

In a step 66, the calculated response is sent to the client that the request came from. Then, the device is set in state 67.

Naturally, the present disclosure is not limited to the embodiments previously described. In particular, the present disclosure is not limited to a method of transmitting or of rendering a haptic effect but also extends to any method of adapting a description of a haptic effect to a given apparatus comprising at least one haptic sensor and at least one haptic actuator. The implementation of calculations necessary to generate the first part and subparts is not limited either to an implementation in software programs but also extends to an implementation in any program type, for example shader type microprograms that can be executed by a GPU type microprocessor. The use of the methods of the present disclosure is not limited to a live utilisation but also extends to any other utilisation, for example for recording evolution of calculated map over the time in a long term memory, such as a hard disk.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method (60) of transmitting a second data representative of a haptic effect, **characterized in that** the method comprises:
- Receiving (62) at least one first data comprising a haptic measurement associated with a first location in a topographical zone;
- Generating (63) a map of said topographical zone (18), the map comprising topographical clusters (21 to 27) of said at least one haptic measurement according to the location that the at least one haptic measurement is associated with;
- Receiving (64) a request of transmitting said second data from a client, said request comprising at least one second location in the topographical zone;
- Transmitting (66) the second data to said client in response to the request, said second data being representative of a haptic effect calculated according to the topographical clusters (21 to 27) of said map (18) and said at least one second location.

2. The method according to claim 1 wherein the received request further comprises a description of the haptic actuators of the client which have sent said request and wherein the second data are further calculated according to said description.

3. The method according to claim 1 or 2 wherein said request from the client comprises no second location, the second location receiving the value of the location associated with the last received haptic measurement from said client.

4. A server (40a) configured to transmit a second data representative of a haptic effect, **characterized in that** the server comprises:
- A receiver (45) configured to receive at least one first data comprising a haptic measurement associated with a first location in a topographical zone;
- A processor (42) configure to generate a map of said topographical zone (18), the map comprising topographical clusters (21 to 27) of said at least one haptic measurement according to the location that the at least one haptic measurement is associated with;
- A receiver (45) configured to receive a request of transmitting said second data from a client, said request comprising at least one second location in the topographical zone;
- A transmitter (45) configured to transmit the second data to said client in response of the request, said second data being representative of a haptic effect calculated according to the topographical clusters (21 to 27) of said map (18) and said at least one second location.

5. The server according to claim 4 wherein the received request further comprises a description of the haptic actuators of the client which have sent said request and wherein the second data are further calculated according to said description.

6. The server according to claim 4 or 5 wherein said request from the client comprises no second location, the second location receiving the value of the location associated with the last received haptic measurement from said client.

7. A method (50) of rendering a haptic effect on a device (40b) equipped with at least one haptic sensor (48) and at least one haptic actuator (49), **characterized in that** the method comprises:
- Transmitting (53), to a server, at least one first data comprising a haptic measurement obtained from said at least one haptic sensor (48) and associated with a first location in a topographical zone;
- Transmitting (54) to the server a request of transmitting a second data representative of a haptic effect, said request comprising at least one second location in the topographical zone;
- Receiving (55), the second data from said server in response to the request, said second data being representative of said haptic effect calculated according to said at least one second location and a map (18) of said topographical zone, said map (18) comprising topographical clusters (21 to 27) calculated according to at least said at least one first data;
- Rendering (56) said haptic effect with the said at least one actuator (49)of said device.

8. The method according to claim 7 wherein said request further comprises a description of said at least one haptic actuator.

9. The method according to claim 7 or 8 wherein no second location is transmitted in the request, indicating to the server that the second location to use is the location associated with the last sent haptic measurement.

10. A device (40b) configured to render a haptic effect, said device being equipped with at least one haptic sensor and at least one haptic actuator, **characterized in that** the device comprises:
- A transmitter (45) configured to transmit, to a server, at least one first data comprising a haptic measurement obtained from said at least one haptic sensor (48) and associated with a first location in a topographical zone;
- A transmitter (45) configured to transmit to the server a request of transmitting a second data representative of a haptic effect, said request comprising at least one second location in the topographical zone;
- A receiver (45) configured to receive the second data from the server, said second data being representative of said haptic effect calculated according to said at least one second location and a map of said topographical zone, said map comprising topographical clusters calculated according to at least said at least one first data;
- The at least one actuator (49) of the device configured to render said haptic effect.

11. The device according to claim 10 wherein said request further comprises a description of said at least one haptic actuator.

12. The device according to claim 10 or 11 wherein no second location is transmitted in the request, indicating to the server that the second location to use is the location associated with the last sent haptic measurement.

13. A computer program product comprising program code instructions to execute the steps of the method of transmitting data according to claim 1, 2 or 3 when this program is executed on a computer.

14. A computer program product comprising program code instructions to execute the steps of the method of rendering a haptic effect according to claim 7, 8 or 9 when this program is executed on a computer.

15. Non-transitory storage medium carrying instructions of program code for executing steps of the method according to one of claims 1 to 3, when said program is executed on a computing device.
